# EUROPEAN PATENT APPLICATION

(11) **EP 2 689 909 A1**
(43) Date of publication of application: **29.01.2014**
(21) Application number: 12382300.7
(22) Date of filing: 25.07.2012
(51) Int. Cl.: B29C 35/02

(54) **Method and system for curing resin composite parts with surface temperature control**

(71) Applicant: Airbus Operations S.L., 28906 Madrid (ES)
(72) Inventor: Santos Gomez, José, Manuel, 28906 Getafe (Madrid) (ES); Ramos Moreno, Ramón, 28906 Getafe (Madrid) (ES)
(74) Representative: Carpintero Lopez, Francisco

(57) **Abstract**

The invention relates to a method and a system for curing resin composite parts, in which the temperature inside an autoclave (5) for curing the parts by means of using thermographic cameras (1) which provide a complete image of the temperature gradient existing on the entire surface of the part during the thermal cycle is automatically controlled, whereby the curing process is successfully adjusted with greater precision to the pre-established heating and cooling ramps according to the theoretical curve defined for a proper curing of the material. The invention is especially applicable in curing carbon fiber parts for producing components for airplanes, marine or land vehicles and industrial machinery in general.

## Description

### Object of the Invention

The present invention generally relates to processes for curing parts made of resin composites, preferably carbon fiber parts.

More specifically, the invention relates to an automatic system and method for controlling the curing process, especially for controlling the temperature inside the autoclave in which the parts are cured, whereby images corresponding to the temperature gradient existing on the surface of the part during the thermal cycle are generated, achieving a more efficient curing process which is adjusted with greater precision to the pre-established heating and cooling ramps according to the theoretical curve defined for a proper curing of the material.

### Background of the Invention

It is commonly know that the aeronautical industry requires structures which, on one hand, support the loads to which they are subjected to meet the high strength and rigidity requirements, and on the other, these structures must be as light as possible. These requirements result in a more widespread use of composite materials in primary structures, since by conveniently applying said composite materials a significant weight saving can be achieved with respect to designs with metallic materials.

Integrated structures have shown to be very efficient in this sense, integrated structure being so called when the different structural elements are produced all at once, which involves the additional advantage of using composite materials, since due to their condition of being formed in independent layers they can be stacked in different desired manners and orientations, offering the possibility of largely integrating the structure, which also often entails cost savings which is essential when competing on the market and is determined by having fewer individual parts to be assembled.

The mentioned structures are usually made up of a skin and stringers which can have a dual profile or an omega profile. By placing these stringers longitudinally on said skin, the thickness thereof can be reduced and be competitive in weight without this penalizing the mechanical properties of the component; such that the most widely used structure today has a skin with integrated stringers that are co-bonded or co-cured.

The skin plus stringer assembly can be produced in a single process by means of which the skin with the stringers is obtained in one part; a production method normally like the following being followed:
- The layers of composite material are first stacked on a flat base, an automatic lay up method being used.
- Next, the stack obtained in the preceding step is folded for forming the parts into the desired shape. Said folding can be performed in different manners, such as, for example, by means of applying a temperature and vacuum cycle molding the stack with the required geometry by means of the appropriate tool the inner geometry of which is copied.
- Independently, the base skin consisting of the overlapping layers of composite material in pre-impregnated state is laminated, such that the fiber orientation is adapted to the structural requirements of the part; to that end, the necessary reinforcements being placed between the different layers of the laminate. The layer distribution must be such that it allows laminating and forming without producing fiber distortions or creases and such that once the part is cured it does not have permanent deformations due to thermal stresses.
- The different elements are then placed in the curing tool on the skin; it may be possible that it is necessary to introduce rowings in this phase (one-way fiber strips which must be made of the same material as that used in the stacks or of a compatible material (to prevents gaps and/or resin accumulations, optimal bonding thus being assured).
- The complete structure is then cured by means of applying a single pressure and temperature cycle with the aid of the appropriate system of tools which can be both inside and outside the vacuum bag with which the structure is surrounded during this process, the suitable compaction of all the areas of the mentioned structure being allowed and eliminating the possible occluded air between the stackedlayers, and said structure being able to be co-cured (if all the portions such as base skin, stringers and others are fresh), co-bonded (for example, if the stringers are previously cured) or glued (all the previously cured elements). This part of the process is where the object of the invention is applied.

In the current state of the art, the thermocouples used for measuring and controlling the temperature during the curing cycle are uniformly placed on the part and in the curing tool. The thermocouples are wired to a control unit, which records the values, processing the information and acting on the parameters of the machine to adjust the heating and cooling ramps to the theoretical curve defined for a proper curing of the material. The autoclave is divided into several sections, assembling groups of independent sets of resistors providing more or less energy depending on the temperature gradients recorded by the control and the temperature demanded by the theoretical heating curve.

The problems existing in the techniques used today for controlling the curing process is that, in addition to time loss while the thermocouples are placed, a discrete signal is obtained with a thermocouple, i.e., discrete signal of a very specific point of the surface, which is used for controlling larger heating/cooling volumes or areas inside the autoclave since an overall control of same cannot be made. This causes precision loss in measurement and therefore a less effective process control causing the heating in the autoclave to not be as homogenous as it could be.

No other type of measure different from thermocouples had been implemented up until now due to the fact that the known measuring instruments are not capable of withstanding the extreme temperature and pressure conditions existing inside the autoclave vessel.

### Description of the Invention

The present invention satisfactorily solves the problems set forth above by means of the subject matter defined in the attached independent claims.

An automatic system for viewing and controlling temperature comprising the use of thermographic cameras housed in a fixed position inside the autoclave has been developed in the present invention. These thermographic cameras are already known devices which capture the infrared radiation corresponding to a body temperature from a distance and allow forming images representative of the measured emissions. All bodies emit an amount of radiation depending on their temperature: more infrared radiation at a higher temperature. Different applications for such cameras are known, but in the present invention, these cameras have been adapted for their specific use in measuring temperature in the extreme temperature and pressure conditions existing inside the autoclave and for processing the image so that it is colored depending on the infrared radiation received.

The system of the invention comprises one or several thermographic cameras suitably arranged in several points of the autoclave vessel, preferably in a fixed position inside the autoclave, for the purpose of measuring the temperature on part of the surface or on the entire surface of the parts to be treated and/or in the work tool or frame inside the autoclave which is used for forming the parts.

Therefore, one aspect of the invention relates to a system for curing resin composite parts, comprising a deposit or vessel configured for housing therein at least one of said parts to be cured. This vessel preferably forms part of an autoclave and is provided with heating means, such as for example, heating resistors for heating the part or parts to be cured. The system is **characterized in that** it comprises at least one piece of thermographic equipment capable of measuring or capturing an infrared radiation inside the autoclave corresponding to the temperature of the part to be cured from a distance, in this case, for capturing an infrared radiation emitted by at least one area of the surface of a part to be cured arranged inside the vessel.

The piece of thermographic equipment is installed in the vessel in a manner suitable for measuring or capturing radiation and for withstanding the extreme pressure and temperature conditions existing inside the autoclave, which can reach 400°C and 15 bars of pressure. Preferably, the piece of thermographic equipment is completely or at least partially housed inside the wall of the autoclave vessel, in a housing existing for such purpose in that wall.

The system further comprises a piece of electronic control equipment communicated with the piece of thermographic equipment for receiving and processing data associated with the captured infrared radiation, and further communicated with said heating means for controlling the temperature inside the vessel depending on pre-established processing data. This control equipment is also capable of configuring the reading areas (that is where a carbon fiber part is located), the signal scanning frequency and the density of points to be controlled. The control equipment controls the process variables with this data: temperature, pressure, vacuum depending on the data required by the processing cycle instructions previously loaded in the system.

Another aspect of the invention relates to a method for curing resin composite parts which comprises measuring or capturing infrared radiation inside an autoclave corresponding to the surface temperature of a part to be cured. In the method, the heating of said part during curing is progressively regulated depending on the captured infrared radiation so that the temperature of the part follows the pre-established ideal heating ramps.

One of the advantages of the invention is that the entire cured surface is automatically controlled in an indirect manner (without contacting the part), allowing the selection of both the surface to be measured and the density of points to be recorded from the control and the reading frequency. Not using contact elements (thermocouples, for example) reduces the risk of connection faults, as well as increases the capacity to adapt to the needs of each particular case of loading the autoclave.

Another effect or advantage of this indirect system for measuring temperature is that it eliminates the recurrent costs derived from using type J contact thermocouples which are disposed of when each cycle ends, as well as the time used in positioning and connecting the thermocouples both to the part and to the control unit.

Furthermore, the electronic control equipment incorporates a computer program which allows:
■ selecting one or several local areas to be controlled (normally associated with the parts to be cured). To that end, a polygonal figure is made with the area which must and must not be taken into account for measuring.
■ defining the density of thermal reading points,
■ configuring the reading frequency from real time to several seconds,
■ storing the data in a plain text file for future analysis,
■ saving images and videos
■ sending the information recorded in real time to process the control equipment.

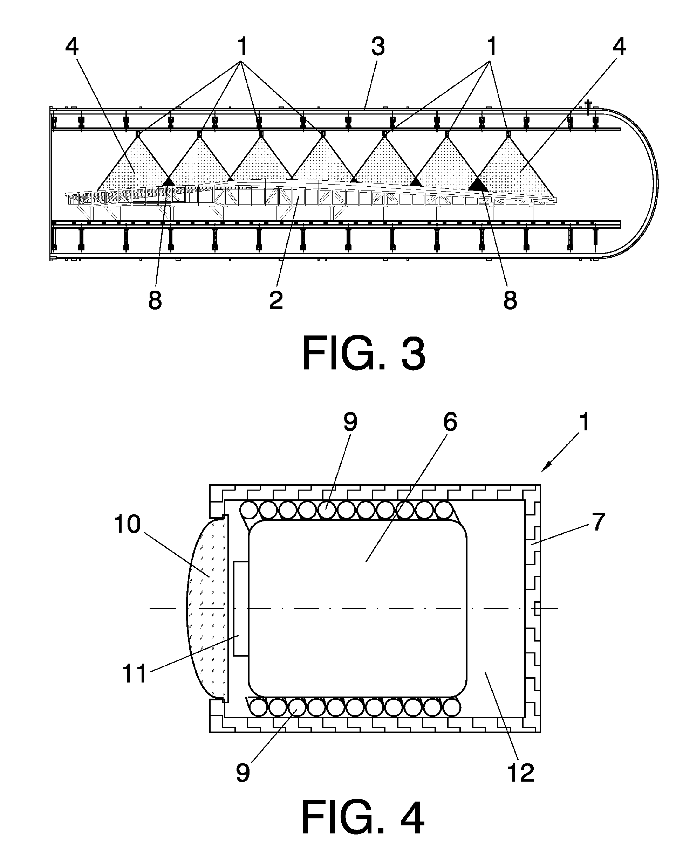

The following must be highlighted to further specify the advantages of the invention:
- Selection of the surface or surfaces to be measured from the control equipment. (Figure 3)
- Selection of the density of control points
- Selection of recording frequency
- Time saving in connecting thermocouples to the part and to the machine
- Consumable saving (thermocouples and calibrated class I cables)
- Post-processing of information with the possibility of generating graphs and videos of the process.

In addition to generating the thermographic image corresponding to the cured part, the system of the invention feeds the control equipment with a matrix of reading data in real time increasing process control precision. The system generates an overall image of the curing frame or carriage with the distribution of the different parts to be cured.

The electronic control equipment is programmed for limiting the areas where the parts to be cured are housed. These defined areas are recorded, allowing feedback to the control for managing the power of the heating resistors and the cooling of the machine based on the pre-established heating instructions, while at the same time allowing storing the information in a file which can be edited for future processing.

All this allows obtaining a more complete and real view of the surface temperature distribution, since localized contact measurement elements, which only allow reading the temperature at the exact point of application, are used in the current state of the art.

Time for placing and connecting the thermocouples both to the part and to the machine is saved with the system of the invention, since the cameras are always housed in the same physical position, scanning the entire useful working surface and it is the programmed control equipment which allows generating local reading areas depending on the location of the parts inside the autoclave.

The system of the invention can be used in different types of autoclaves, both in those which are dedicated to one part, and those which are used for curing portions of different dimensions or surfaces.

The invention is generally applicable in curing parts the materials of which can be integrated by different resins and different types of fibers such as: glass fiber, carbon fiber, kevlar, boron fiber, epoxy resin, thermoplastic resin and other thermosetting resins. Nevertheless, the invention is also applicable in the thermal treatment of any type of material, such as thermoplastic materials, for example.

The invention is especially applicable to carbon fiber parts which, due to their composition, need an irreversible curing process so that their epoxy matrix polymerizes and confers all its final mechanical properties to the material.

The industrial application of the invention preferably relates to the production of: plane structures and controls (such as liners for airfoils, stringers, ribs, fittings); spacecraft; marine and land vehicles; and industrial machinery and equipment.

An additional advantage of the invention is that it solves the measurement referencing problems. Thermal measurement systems normally work by comparing the temperature of what is to be measured with a reference temperature. In this case, since the environment in which the camera has been installed changes temperature while it is measuring, correct measurement cannot be made if the protection systems depicted in Figure 4 were not provided since it would compare the temperature to be measured with that of the autoclave and not with the reference temperature which such systems normally have.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a front elevational view of a cross-section of the autoclave with the built-in thermographic system. The dotted triangular area depicts the infrared radiation capturing space of the thermographic camera capturing infrared radiation from the part to be cured.
Figure 2 shows an enlarged detail view of the piece of thermographic equipment of Figure 1 built into the wall of the autoclave vessel.
Figure 3 shows a side elevational view of a longitudinal section of another preferred embodiment of the invention, in which the autoclave provided with several pieces of thermographic measuring equipment is seen. The infrared radiation capturing area (4) and the overlapping areas (8) are shaded to facilitate their identification.
Figure 4 shows a longitudinal section of the piece of thermographic equipment of the invention including the thermographic camera and the protection and cooling elements.

### Preferred Embodiment of the Invention

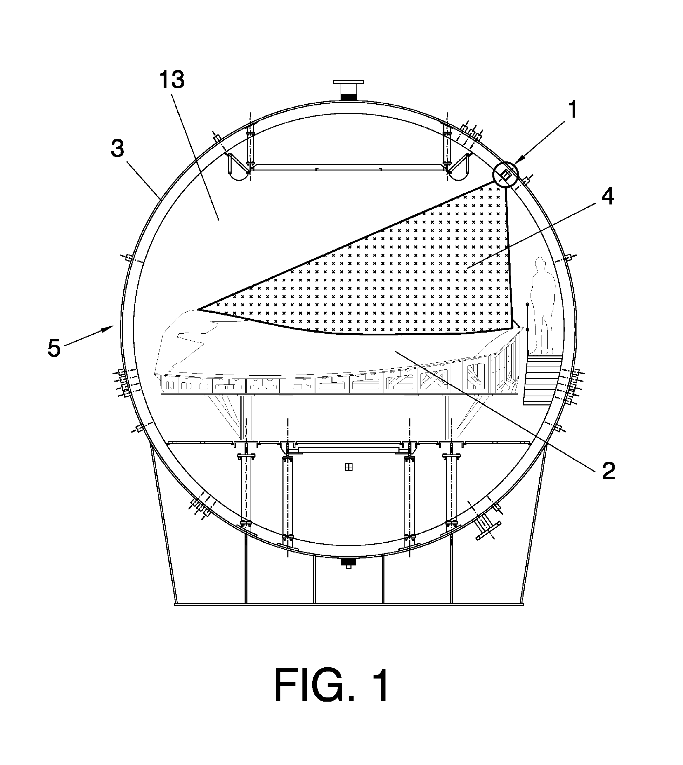

Figure 1 shows a preferred embodiment of a system for the thermal treatment of heat curable parts according to the invention, which is made up of an autoclave (5) including a vessel (3) defining an inner cavity (13) intended for receiving one or several parts to be cured (not depicted), preferably carbon fiber parts, which will be placed on a work tool or frame (2) having a surface formed with the shape to be given to said part.

The autoclave (5) also conventionally incorporates heating means (not depicted) such as resistors, for example, for heating the inside of the vessel (3), as well as pressure means (not depicted) for modifying the pressure inside the vessel (3) when it is closed in the processing phase for curing the parts therein.

In this preferred embodiment, the system incorporates a piece of thermographic equipment (1) built into the wall of the vessel (3), i.e., at least partially housed in a cavity (14) existing for such purpose in said wall, i.e., between the outer surface (15) and the inner surface (16) of the vessel (3), which has the effect or advantage that the wall itself serves to reduce the effect of pressure and temperature on the thermographic camera and other internal components of the piece of thermographic equipment (1).

As seen in Figure 1, the piece of thermographic equipment (1) is installed in the autoclave vessel in a suitable manner, i.e., at a convenient distance and angle, for capturing the infrared radiation from at least one area of the surface of one or several parts to be cured placed on the frame (2) inside the vessel (3).

The infrared radiation capturing area (4) capturing infrared radiation corresponding to the surface temperature of a part to be treated (when the part is on the frame), which is captured or received by the thermographic camera (6), has been schematically depicted in that same Figure 1 by means of a polygonal shape.

The piece of thermographic equipment (1) of Figure 1 has been depicted in more detail in Figure 4, where it can be observed that this piece of equipment comprises a casing (7), a thermographic camera (6) housed inside said casing (7), autonomous cooling means (9) arranged for cooling the thermographic camera (6), and an optical lens (10). The casing (7) is shaped like a receptacle open at one of its bases in which there is coupled the optical lens (10), such that the space (12) inside the casing is hermetically sealed to protect the thermographic camera (6) and other components of the piece of equipment from the pressure existing inside the autoclave.

The casing (7) is a metal casing and is designed to withstand pressures greater than 9 bars. The optical lens (10) is made of highly resistant glass to withstand high pressures, and it is a special lens so that it does not affect the measurements of the thermographic system, since the main problem is that image refraction which leads to errors occurred until now, therefore in this case both the material and the quality thereof are special to allow performing thermal measurement with the system proposed herein by means of it..

The cooling system is adapted so that the camera and the associated electronic components withstand high temperatures, and consists preferably of an air type Vortex exchanger, including a spiral-shaped conduit (9) arranged inside the casing (7) and around the camera (6) for cooling it.

The thermographic camera (6) is placed inside the casing such that it can receive in its receiving element (11) an infrared radiation through said lens (10).

The system further comprises a piece of electronic control equipment for controlling the curing process (not depicted), which is used for viewing and automatically controlling the curing process, especially the temperature. The thermographic camera provides data, for example, in the form of an electric signal, corresponding to the radiation captured, which data is received in real time and processed by said electronic control equipment, which is programmed for generating thermographic images representative of the surface temperature of the part or parts that are being thermally treated inside the autoclave.

In turn, the electronic control equipment controls the operation of the heating means, the cooling means of the thermographic equipment, and/or the pressure means of the autoclave, for regulating these parameters and therefore for automatically controlling the curing process in an optimal manner.

The system allows generating an overall image of the curing frame (2) with the distribution of the different parts to be cured. The electronic control equipment is programmed for limiting the areas where the parts to be cured are housed. These defined areas are recorded, allowing feedback to the control for managing the power of the resistors and the cooling of the machine based on the pre-established heating instructions.

The electronic control equipment is also programmed for configuring the reading areas (that is where a carbon fiber part is housed), the signal scanning frequency and the density of points to be controlled. The control equipment controls the control variables of the curing process with this data: temperature, pressure, vacuum depending on the data required by cycle instructions previously loaded in the electronic equipment.

In other embodiments, the system comprises several pieces of thermographic equipment conveniently distributed in the autoclave for suitably capturing the infrared radiation from one or several parts to be treated. The use of more than one piece of thermographic equipment may be necessary, for example, when several parts are treated at the same time, or when the parts are large, and/or when they have complex surfaces with several curvatures.

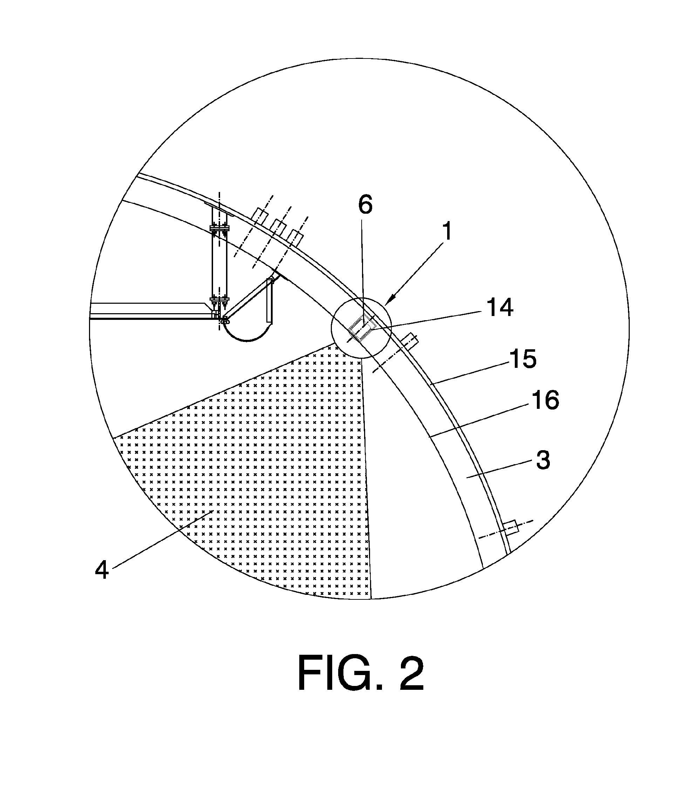

One embodiment has been shown in Figure 2, in which the system comprises a plurality of pieces of thermographic equipment (1) distributed throughout the inside of the autoclave for the purpose of measuring the surface temperature of a large part when it is placed on the frame (2). Each one of the pieces of thermographic equipment (1) is used for capturing the radiation in a specific area of the part, the processing equipment subsequently being responsible for creating a complete image of the surface temperature from the measurements of each of the cameras.

Taking into account that the parts generally have curvatures, and for the purpose of assuring that there is no uncontrolled area of the part, the system of the invention is capable of modifying the infrared radiation capturing area (4), such that two capturing areas (4) of adjacent pieces of equipment (1) overlap or coincide on the surface to be measured. This is the case depicted in Figure 3, where many overlapping areas (8) (black triangles) formed by the intersection of adjacent capturing areas (4), located to be adapted to the double curvature geometry which the tools or frame (2) used for curing the carbon fiber normally have, can be seen.

## Claims

1. System for curing resin composite parts, comprising:
a vessel configured for housing at least one of said parts to be cured therein, said vessel being provided with heating means for heating said part,
**characterized in that** it further comprises at least a thermographic equipment capable of capturing an infrared radiation from a distance,
and **in that** said thermographic equipment is installed in the vessel in a manner suitable for capturing an infrared radiation from at least one area of the surface of a part to be cured arranged inside the vessel.

2. System according to claim 1, further comprising an autoclave including said vessel.

3. System according to claim 1 or 2, wherein the piece of thermographic equipment is housed at least partially inside the wall of the vessel.

4. System according to any of the preceding claims, further comprising an electronic control equipment communicated with the thermographic equipment for receiving and processing data associated with the infrared radiation captured, and in which the electronic control equipment is communicated with said heating means for controlling the temperature inside the vessel depending on pre-established processing data.

5. System according to claim 4, wherein the electronic control equipment incorporates means for generating images representative of the temperature of one or several parts to be cured inside the autoclave.

6. System according to claim 4 or 5, wherein the electronic control equipment is programmed for defining reading areas inside the autoclave vessel in correspondence with the position of the part or parts to be cured.

7. System according to any of the preceding claims, wherein the piece of thermographic equipment comprises a casing, a thermographic camera housed inside said casing, cooling means arranged for cooling the thermographic camera, and an optical lens arranged such that the camera can capture an infrared radiation through said lens.

8. System according to any of the preceding claims, comprising two or more pieces of thermographic equipment assembled in the autoclave such that each one can capture infrared radiation from different areas of a part to be treated.

9. System according to claim 8, wherein said pieces of thermographic equipment are adapted such that the radiation of one or more areas of a part to be treated is received by two or more pieces of thermographic equipment.

10. System according to any of the preceding claims suitable for treating carbon fiber parts.

11. Method for curing resin composite parts, comprising capturing infrared radiation inside an autoclave corresponding to the surface temperature of a part to be cured, and progressively regulating the heating of said part during its curing depending on infrared radiation captured and depending on pre-established heating data.

12. Method according to claim 11, further comprising arranging at least one thermographic equipment in said autoclave for capturing said infrared radiation, wherein at least one thermographic equipment is housed in the wall of the autoclave vessel.

13. Method according to claim 11 or 12, comprising generating images representative of the temperature of one or several parts to be cured inside the autoclave.
